# EUROPEAN PATENT APPLICATION

(11) **EP 4 841 802 A1**
(43) Date of publication of application: **18.11.2026**
(21) Application number: 26177153.9
(22) Date of filing: 07.05.2026
(51) Int. Cl.: H01M 50/533, H01M 50/536, H01M 50/538, H01M 50/559

(54) **BATTERY CELL**

(30) Priority: 13.05.2025 CN 202520939469 U
(71) Applicant: AESC Japan Ltd., Yokohama-shi, Kanagawa 220-0012 (JP)
(72) Inventor: JI, Peng, Jiangyin City, Wuxi City, 214443 (CN)
(74) Representative: Becker, Eberhard

(57) **Abstract**

Disclosed is a battery cell having an electrode assembly (120) and an adapter member. A first current collector (18) of a first electrode sheet (10) of the electrode assembly (120) includes a coated region (18b) coated with a first active material layer (16) and an uncoated region (18a) without the first active material layer (16) and electrically connected to an electrode terminal; an adapter member, located on a side of the electrode assembly (120) adjacent to and welded to the uncoated region (18a) to form a weld mark (205), the uncoated region (18a) has a first bending region (51) and a second bending region (52) disposed in sequence along the first direction and bending in opposite directions, and a projection of the first bending region (51) in the first direction covers the separator (122) on a first side of the first current collector (18).

## Description

### BACKGROUND

### Technical Field

The present disclosure relates to the technical field of secondary batteries, and more specifically, to a battery cell.

### Related Art

In the sector related to new-energy power batteries, a "secondary battery" refers to a rechargeable battery, also known as a storage battery or accumulator. Unlike a primary battery, a secondary battery may undergo multiple charge-discharge cycles by recharging (i.e., by application of a reverse charging current), thereby permitting repeated use. A secondary battery generally includes an electrode assembly and a housing, among other members. The electrode assembly includes a second electrode sheet, a first electrode sheet, and a separator disposed between the second and first electrode sheets. The second electrode sheet, first electrode sheet, and separator are stacked and subsequently wound to form the electrode assembly, which is then sealed within the housing. However, existing secondary batteries present the issue that the separator is susceptible to damage, for example, thermal damage during welding.

### SUMMARY

In view of the problems existing in the related art, an objective of the present disclosure is to provide a single battery cell so as to at least avoid the problem that the separator is susceptible to thermal damage caused by welding heat.

To achieve the above purpose, the present disclosure provides a battery cell, including: a housing, provided with an electrode terminal; an electrode assembly, accommodated in the housing, including a first electrode sheet, a second electrode sheet, and a separator disposed between the first electrode sheet and the second electrode sheet, wherein the first electrode sheet includes a first current collector and a first active material layer, the first current collector includes a coated region coated with the first active material layer and an uncoated region not coated with the first active material layer, the uncoated region is electrically connected to the electrode terminal, and a direction from the coated region toward the uncoated region is a first direction; an adapter member, located on a side of the electrode assembly adjacent to the uncoated region along the first direction, wherein the adapter member is welded to the uncoated region to form a weld mark, and a welding direction between the adapter member and the uncoated region is opposite to the first direction, the uncoated region of the first current collector has a first bending region and a second bending region disposed in sequence along the first direction, the first bending region and the second bending region are bent in opposite directions in a radial direction of the electrode assembly, and a projection of the first bending region in the first direction covers the separator on a first side of the first current collector, the first side is a side toward which the first bending region is bent, and a projection of the weld mark in the first direction covers the separator covered by the first bending region.

In some embodiments, the adapter member is a current-collecting plate, located on a side of the electrode assembly along the first direction, and welded to the uncoated region to electrically connect the uncoated region to the electrode terminal, wherein the first bending region and the second bending region are connected through a first straight segment, and the first straight segment is welded to the current-collecting plate.

In some embodiments, the adapter member is a current-collecting plate, located on a side of the electrode assembly along the first direction, and welded to the uncoated region to electrically connect the uncoated region to the electrode terminal, wherein the first bending region and the second bending region are connected through a first straight segment, and the weld mark between the current-collecting plate and the uncoated region is spaced apart from the first straight segment.

In some embodiments, the uncoated region further includes a straight connecting segment, the straight connecting segment is connected to an end of the second bending region away from the coated region, and the straight connecting segments of a plurality of uncoated regions are stacked in the first direction and welded to the current-collecting plate.

In some embodiments, the first bending region includes a rounded-corner portion, a first straight segment, and a second straight segment. The first straight segment is connected to an end of the rounded-corner portion away from the coated region, the second straight segment is connected to an end of the rounded-corner portion adjacent to the coated region, and a minimum distance between the first straight segment and the second straight segment in the first direction is a, wherein: a≥2b, and b is a thickness of the first current collector.

In some embodiments, the first bending region is in contact with the separator on the first side of the first current collector, and presses down the separator to cause the separator to bend.

In some embodiments, the projection of the first bending region completely covers the separator in contact with the first bending region.

In some embodiments, the separator has a segment that extends beyond the first active material layer in the first direction, and an extension distance by which the segment extends beyond the first active material layer is 0.5 mm to 3 mm.

In some embodiments, the second electrode sheet includes a second current collector and a second active material layer covering a partial surface of the second current collector, and in the first direction, a height by which the first active material layer extends beyond the second current collector is greater than 1 mm.

In some embodiments, the second current collector includes a coated region coated with the second active material layer and an uncoated region not coated with the second active material layer. The coated region of the second current collector and the uncoated region of the second current collector are disposed adjacent to each other along a direction opposite to the first direction, wherein the housing further includes another electrode terminal, and the uncoated region of the second current collector is electrically connected to the another electrode terminal.

In some embodiments, an end portion of the first bending region, in the bending direction thereof, is inserted into a first bending region adjacent thereto in the radial direction.

In some embodiments, the battery cell further includes a tail insulating tape for fixing a tail end of the separator. The electrode assembly includes a main body. The main body includes the first active material layer and the coated region of the first current collector. The uncoated regions are plural in number and any one of the second bending regions is located within a projection range of the main body and the tail insulating tape in the first direction.

In some embodiments, along the first direction, the uncoated region is further provided with another first bending region disposed on a side of the second bending region away from the first active material layer.

In some embodiments, the housing includes an end wall and a sidewall connected to an edge of the end wall. One end of the sidewall along the first direction has an opening. The sidewall adjacent to the opening is provided with a groove protruding inward in a radial direction of the opening. The electrode assembly is located between the end wall and the groove. The adapter member is a current-collecting plate, and the current-collecting plate is connected to a side of the groove facing the electrode assembly.

In some embodiments, one end of the sidewall of the housing along the first direction has an opening. The housing further includes a lid assembly covering the opening. The adapter member is the lid assembly. The uncoated region is welded to the lid assembly, and the lid assembly is electrically connected to the electrode terminal. The first bending region and the second bending region are connected through the first straight segment. The first straight segment is welded to the lid assembly, or the weld mark between the lid assembly and the uncoated region is spaced apart from the first straight segment.

In some embodiments, in the first direction, a spacing between the first bending region and the first active material layer is d, where 0.5 mm≤d≤2.5 mm.

In some embodiments, the uncoated region is electrically connected to the electrode terminal through the current-collecting plate or the lid assembly, wherein the uncoated region further includes the straight connecting segment. The straight connecting segment is connected to an end of the second bending region away from the coated region, and the straight connecting segment is stacked in the first direction and welded to the current-collecting plate or the lid assembly.

In some embodiments, the electrode terminal is the housing, or the electrode terminal is a terminal post, and the terminal post is connected to the housing.

An embodiment of the present disclosure further provides a battery pack, including the battery cell described in any one of the above embodiments.

An embodiment of the present disclosure further provides an electronic device, including the battery pack described above.

The advantageous technical effects of the present disclosure include the following: by providing the first bending portion and the second bending portion on the uncoated region of the first current collector serving as a tab, the number of layers of the uncoated region above the separator is increased, thereby affording more effective protection to the separator. For example, by increasing the number of layers of the uncoated region above the separator, the number of weldable layers of the tab is increased, the welding process window is broadened, and thermal damage to the separator caused by welding heat may be avoided.

### BRIEF DESCRIPTION OF THE DRAWINGS

In order to more clearly illustrate the technical solutions in the embodiments of the present disclosure or the prior art, the drawings required for use in the description of the embodiments or the prior art will be briefly introduced below. Clearly, the drawings described below are some embodiments of the present disclosure, and for those of ordinary skill in the art, other drawings may also be obtained based on these drawings without creative effort.
FIG. 1 illustrates a schematic view of an electronic device as a vehicle according to an embodiment of the present disclosure.
FIG. 2A illustrates a perspective view of a secondary battery according to an embodiment of the present disclosure.
FIG. 2B illustrates a cross-sectional view of a secondary battery according to an embodiment of the present disclosure.
FIG. 3A illustrates a cross-sectional view of a conventional electrode assembly.
FIG. 3B illustrates a partial enlarged view of a cross-section of a conventional electrode assembly.
FIG. 4A illustrates a schematic plan view of a first electrode sheet according to an embodiment of the present disclosure.
FIG. 4B illustrates a perspective view of an electrode assembly according to an embodiment of the present disclosure.
FIG. 5 illustrates a cross-sectional view of another conventional electrode assembly.
FIG. 6A illustrates a cross-sectional view of an electrode assembly according to some embodiments.
FIG. 6B illustrates a partial enlarged view of the electrode assembly shown in FIG. 6A.
FIG. 6C illustrates a partial enlarged view of the electrode assembly shown in FIG. 6A welded to a first current-collecting plate.
FIG. 7A illustrates a partial enlarged view of an electrode assembly on a side of the first current-collecting plate according to some embodiments.
FIG. 7B illustrates a top view of the first current-collecting plate in the present embodiment.
FIG. 8 illustrates a cross-sectional view of an electrode assembly according to another embodiment.
FIG. 9 illustrates a cross-sectional view of an electrode assembly according to still another embodiment.

### DESCRIPTION OF THE EMBODIMENTS

For a better understanding of the spirit of the embodiments of the present disclosure, further description is provided below in conjunction with some preferred embodiments of the present disclosure.

The embodiments of the present disclosure will be described in detail below. Throughout the specification of the present disclosure, the same or similar members and members having the same or similar functions are denoted by similar reference numerals. The embodiments with respect to the drawings described herein are illustrative and diagrammatic in nature and are provided to provide a basic understanding of the present disclosure. The embodiments of the present disclosure should not be construed as limitations on the present disclosure.

As used herein, the terms "approximately," "substantially," "essentially," and "about" are provided to describe and account for small variations. When used in conjunction with an event or circumstance, the terms may refer to instances in which the event or circumstance occurs precisely as well as instances in which the event or circumstance occurs in close approximation.

In the present specification, unless otherwise specifically designated or limited, relative terms such as "central," "longitudinal," "lateral," "front," "rear," "right," "left," "internal," "external," "lower," "higher," "horizontal," "vertical," "above," "below," "upper," "lower," "top," "bottom," and derivatives thereof (such as "horizontally," "downwardly," "upwardly," and the like) should be construed to refer to the directions described in the discussion or depicted in the drawings. These relative terms are used only for convenience of description and do not require that the present disclosure be constructed or operated in a particular direction.

For convenience of description, "first," "second," "third," and the like may be used herein to distinguish different members of a drawing or a series of drawings. "First," "second," "third," and the like are not intended to describe the corresponding members. In addition, the embodiments in the present disclosure and the features in the embodiments may be combined with each other without conflict. The present disclosure will be described in detail below with reference to the drawings in conjunction with the embodiments.

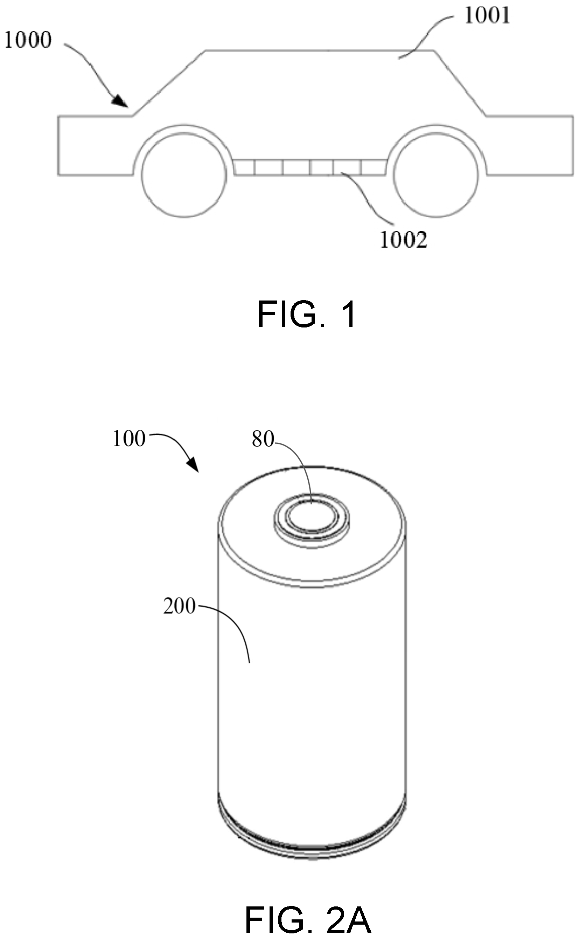

The present disclosure provides an electronic device 1000. For convenience of description, the following embodiments take the electronic device 1000 being a vehicle as an example for illustration. Referring to FIG. 1, a battery pack 1002 is disposed inside the vehicle, and the battery pack 1002 may be disposed at the bottom, front, or rear of a vehicle body 1001. The battery pack 1002 may be provided to supply power to the vehicle; for example, the battery pack 1002 may serve as an operating power supply for the vehicle. A working portion of the electronic device 1000 is electrically connected to the battery pack 1002 to obtain electrical energy support. The vehicle may be a fuel-powered vehicle, a gas-powered vehicle, or a new energy vehicle, and the new energy vehicle may be a pure electric vehicle, a hybrid vehicle, or a range-extended vehicle, or the like, but is not limited thereto. The working portion is the vehicle body, and the battery pack 1002 is disposed at the bottom of the vehicle body to provide electrical energy support for the operation of the vehicle or the operation of electrical members inside the vehicle. However, in some other embodiments, the electronic device 1000 may also be a mobile phone, a portable device, a laptop computer, a ship, a spacecraft, an electric toy, an electric tool, or the like. Spacecraft includes airplanes, rockets, space shuttles, and spaceships, and the like. The working portion may receive electrical energy from the battery pack 1002 and perform corresponding work by means of unit components, such as a blade rotation unit of a fan or a suction working unit of a vacuum cleaner. Electric toys include stationary or mobile electric toys, such as game consoles, electric automobile toys, electric ship toys, and electric airplane toys, among others. Electric tools include metal-cutting power tools, grinding power tools, assembly power tools, and power tools for railway use, such as electric drills, electric grinders, electric wrenches, electric screwdrivers, rotary hammers, impact drills, concrete vibrators, and electric planers, among others. The embodiments of the present disclosure impose no particular limitation on the foregoing electronic device 1000.

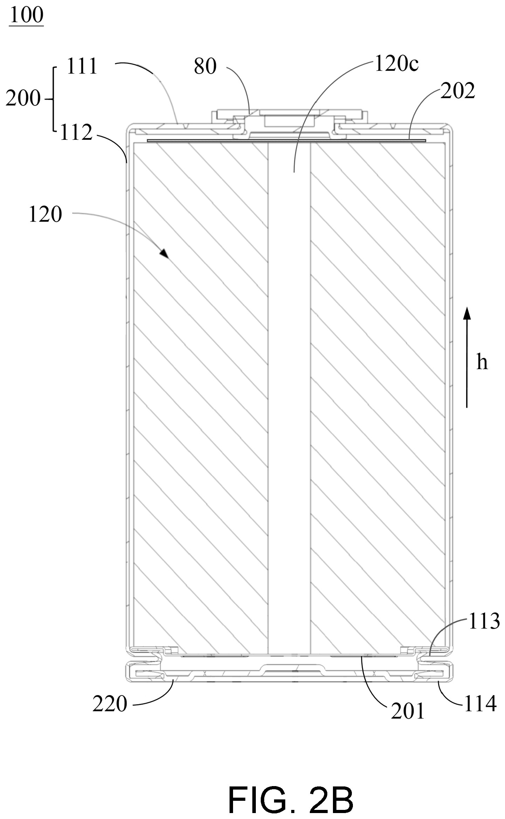

FIG. 2A illustrates a perspective view of a secondary battery 100 according to an embodiment of the present disclosure. FIG. 2B illustrates a cross-sectional view of the secondary battery 100 according to an embodiment of the present disclosure. The secondary battery 100 may also be referred to as a battery cell. Referring to FIG. 2A and FIG. 2B, in an embodiment where the secondary battery 100 is a columnar battery, the secondary battery 100 includes a housing 200 and an electrode assembly 120 mounted inside the housing 200. The secondary battery 100 has a height direction h. Along a direction opposite to the height direction h, an end of the housing 200 is provided with an opening, and a lid assembly 220 is provided to seal the opening. The housing 200 and the lid assembly 220 are members that jointly accommodate the electrode assembly 120 and an electrolyte. A material of the housing 200 may be any one of a variety of available materials, such as copper, iron, aluminum, steel, aluminum alloy, and the like. The housing 200 may be in a columnar shape and defines an accommodating cavity, and the electrode assembly 120 is disposed in the accommodating cavity. A diameter of the housing 200 may be determined according to a specific diameter of the electrode assembly 120, such as 18 mm, 21 mm, 46 mm, and the like. In some embodiments, the secondary battery 100 may be a 4680 columnar battery (having a diameter of 46 mm and a height of 80 mm), a 4695 columnar battery (having a diameter of 46 mm and a height of 95 mm), or a 46120 columnar battery (having a diameter of 46 mm and a height of 120 mm).

The housing 200 may include an end wall 111 and a sidewall 112 surrounding the end wall 111. The sidewall 112 is connected to an edge of the end wall 111. The end wall 111 and the sidewall 112 may jointly define the accommodating cavity to accommodate the electrode assembly 120 of the secondary battery 100. After the electrode assembly 120 is placed into the housing 200, the opening of the housing 200 may be sealed by the lid assembly 220.

The sidewall 112 adjacent to the opening is provided with a groove 113 protruding inward in a radial direction of the opening. Along the height direction h of the secondary battery 100, the electrode assembly 120 is disposed between the end wall 111 of the housing 200 and the groove 113, and the groove 113 may restrict an axial movement of the electrode assembly 120 between the end wall 111 and the groove 113. An end portion of the sidewall 112 of the housing 200 on the opening side may be configured as a crimping portion 11432, and the crimping portion 11432 extends toward the interior of the housing in the radial direction of the opening. The crimping portion 11432 and the groove 113 are arranged at intervals along the height direction h, and the groove 113 and the crimping portion 11432 may jointly clamp the lid assembly 220. The lid assembly 220 may be electrically insulated from the housing 200. For example, the lid assembly 220 may be electrically insulated from the housing 200 by disposing an insulating member between an edge of the lid assembly 220 and the sidewall 112.

The lid assembly 220 may be provided with a fragile portion. When thermal runaway occurs in the battery, the high-temperature and high-pressure emissions inside the battery may be discharged from the bottom of the battery, breaking through the fragile portion on the lid assembly 220 before being discharged to the outside, thereby achieving good discharge of the emissions.

In some embodiments, the end wall 111 of the housing 200 may serve as a first electrode terminal (e.g., a negative electrode terminal) of the secondary battery. In some embodiments, a first tab (e.g., a negative electrode tab) of the electrode assembly 120 faces the lid assembly 220, and the first tab may be electrically connected to the housing 200 through a first current-collecting plate 201 disposed between the lid assembly 220 and the electrode assembly 120, such that the housing 200 is electrically charged (e.g., negatively charged). In this embodiment, the first current-collecting plate 201 may be referred to as an adapter member that electrically connects the electrode assembly 120 to the negative electrode terminal. The first current-collecting plate 201 may be welded to the sidewall 112 of the housing 200 by laser welding. Furthermore, the first current-collecting plate 201 is further welded to the first tab. In an embodiment, a welding position of the first current-collecting plate 201 and the sidewall 112 is located on a side of the groove 113 facing the electrode assembly 120. In other embodiments, the first tab may be directly welded to the lid assembly 220, such that the housing 200 is electrically charged (e.g., negatively charged). In this embodiment, the lid assembly 220 may be referred to as an adapter member that electrically connects the electrode assembly 120 to the negative electrode terminal.

The secondary battery 100 may further include a terminal post 80, and the terminal post 80 passes through the end wall 111 and is insulated from the end wall 111. The terminal post 80 may serve as a second electrode terminal (e.g., a positive electrode terminal) of the secondary battery. The terminal post 80 may be electrically connected to a second tab (e.g., a positive electrode tab) of the electrode assembly 120 through a second current-collecting plate 202 disposed between the terminal post 80 and the electrode assembly 120, such that the terminal post 80 is electrically charged (e.g., positively charged). The second current-collecting plate 202 may be referred to as an adapter member that electrically connects the electrode assembly 120 to the positive electrode terminal. In some embodiments, the terminal post 80 may be welded to the second current-collecting plate 202 by laser welding, and the second current-collecting plate 202 is welded to the second tab.

The electrode assembly 120 may be primarily formed by stacking and winding a positive electrode sheet, a negative electrode sheet, and a separator disposed between the positive electrode sheet and the negative electrode sheet in sequence. The positive electrode sheet, the negative electrode sheet, and the separator may be wound around an axis. Furthermore, the electrode assembly 120 may have a roll center hole 120c, and a winding axis may be an axis of the roll center hole 120c.

In some embodiments, the positive electrode sheet may include a positive electrode current collector and a positive electrode active material layer, and the positive electrode active material layer is coated on a partial surface of the positive electrode current collector. An uncoated region of the positive electrode current collector that is not covered by a positive-electrode-coated region is provided to form a positive electrode tab. The negative electrode sheet may include a negative electrode current collector and a negative electrode active material layer, and the negative electrode active material layer is coated on a partial surface of the negative electrode current collector. An uncoated region of the negative electrode current collector that is not covered by a negative-electrode-coated region is provided to form a negative electrode tab.

In an example of the secondary battery 100 of the present disclosure, a method of manufacturing the secondary battery 100 of the present disclosure includes the following steps:

Winding: A wound structure formed by stacking and winding the negative electrode sheet (e.g., a first electrode sheet), the separator, and the positive electrode sheet (e.g., a second electrode sheet), wherein uncoated portions of the negative electrode current collector of the negative electrode sheet and the positive electrode current collector of the positive electrode sheet are used as a positive electrode tab and a negative electrode tab, and the positive electrode tab and the negative electrode tab are bent toward the roll center hole along a radial direction of the electrode assembly.

Current-collecting plate welding with electrode assembly: The second current-collecting plate 202 and the first current-collecting plate 201 are welded and connected to surface regions of the bent positive electrode tab and negative electrode tab, respectively.

Insertion into housing: The electrode assembly 120, which has been welded with the first current-collecting plate 201 and the second current-collecting plate 202, is inserted into the housing 200 through the opening, and the manner of inserting the electrode assembly 120 in this step is not limited, for example, the insertion may be performed manually or by a robotic arm.

Mounting the terminal post 80.

### Injecting an electrolyte.

Sealing: The lid assembly 220 is hermetically mounted on the opening, and there are various sealing methods, which are not limited herein. In some embodiments, an outer periphery of the housing 200 is first roll-pressed to form the groove 113 that is recessed toward a center of the housing 200, so as to restrict the movement of the electrode assembly 120 along the height direction h, and then a mechanical sealing process is applied to stack and seal the lid assembly 220 to form the crimping portion 11432, thereby hermetically mounting the lid assembly 220 on the opening of the housing 200. This step utilizes a mature process that is cost-effective and efficient.

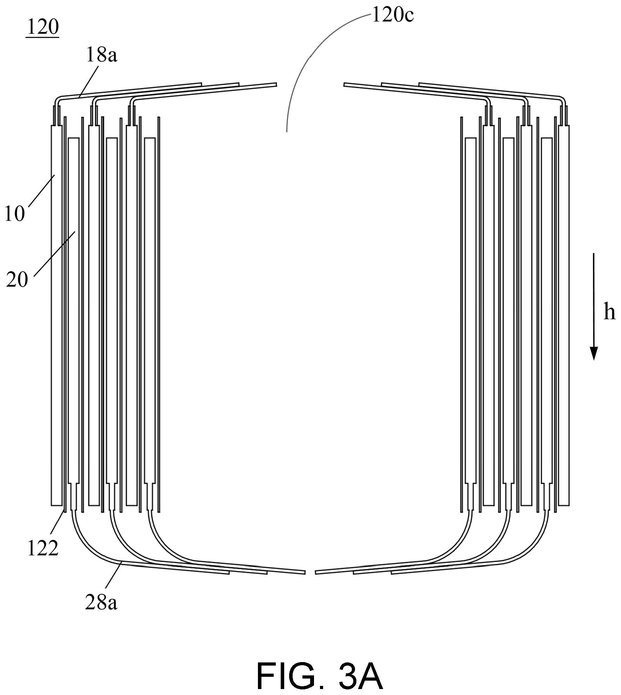

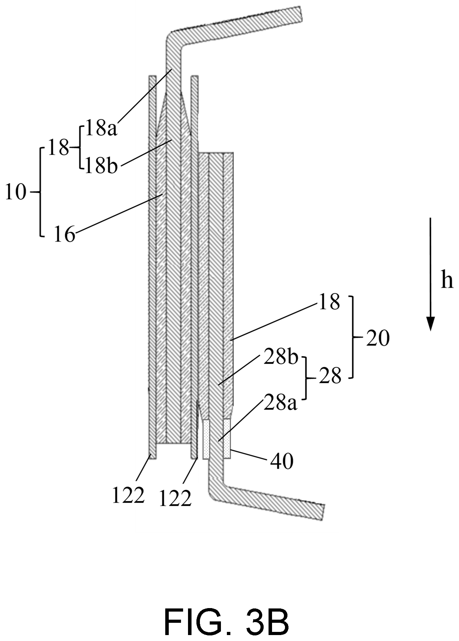

FIG. 3A shows a cross-sectional view of the conventional electrode assembly 120. FIG. 3B is a partial enlarged view of a cross-section of the conventional electrode assembly 120. Referring to FIG. 3A and FIG. 3B, the electrode assembly 120 includes a first electrode sheet 10, a second electrode sheet 20, and a separator 122 disposed between the first electrode sheet 10 and the second electrode sheet 20.

The first electrode sheet 10 may include a first current collector 18 and a first active material layer 16, and a partial surface of an opposite surface of the first current collector 18 along a thickness direction thereof is covered by the first active material layer 16. The first current collector 18 includes a coated region 18b coated with the first active material layer 16, and an uncoated region 18a not covered by the first active material layer 16. The coated region 18b and the uncoated region 18a are disposed adjacent to each other along a direction opposite to the height direction h. The uncoated region 18a may be used as a first tab, for example, a negative electrode tab. The second electrode sheet 20 includes a second current collector 28 and a second active material layer 26, and at least partial surfaces on both sides of the second current collector 28 along a thickness direction thereof are covered by the second active material layer 26. The second current collector 28 includes a coated region 28b coated with the second active material layer 26, and an uncoated region 28a not covered by the second active material layer 26. The coated region 28b and the uncoated region 28a are disposed adjacent to each other along the height direction h. The uncoated region 28a may be used as a second tab, for example, a positive electrode tab. In the present embodiment, the electrode assembly 120 has a positive electrode tab and a negative electrode tab on opposite sides thereof, respectively.

In some embodiments, the first electrode sheet 10 is a negative electrode sheet, and the second electrode sheet 20 is a positive electrode sheet. In such embodiments, for example, taking a lithium-ion battery as an example, a material of the first current collector 18 may be copper, the first active material layer 16 may include a first active material (negative electrode active material), and the first active material may be carbon or silicon, etc. A material of the second current collector 28 may be aluminum, the second active material layer 26 may include a second active material (positive electrode active material), and the second active material may be lithium cobalt oxide, lithium iron phosphate, ternary lithium, or lithium manganese oxide, etc. In some embodiments, a material of the separator 122 may be, for example, PP (polypropylene) or PE (polyethylene), etc.

In order to minimize the possibility of contact between the first electrode sheet 10 and the second electrode sheet 20, the electrode assembly 120 further includes an insulating layer 40, and the insulating layer 40 covers at least a portion of the uncoated region 28a of the second current collector 28. The insulating layer 40 may be disposed on surfaces on both sides of the second current collector 28. The insulating layer 40 may effectively prevent electrical contact between the first electrode sheet 10 and the second electrode sheet 20.

In some embodiments, the insulating layer 40 is mainly composed of boehmite and PVDF (polyvinylidene difluoride), wherein boehmite accounts for 80% and PVDF accounts for 20%. In some embodiments, the insulating layer 40 is a ceramic material layer. In some embodiments, the insulating layer 40 includes a color developer, so as to distinguish, through the coloring effect of the color developer, whether a side coated with the insulating layer 40 is the front side or the back side of the second electrode sheet 20, including but not limited to distinguishing an areal density of the front and back sides of the second electrode sheet 20. The main ingredient of the color developer may be bismuth vanadate, which is yellow in color.

The uncoated regions 18a and 28a of the first current collector 18 and the second current collector 28 may be bent toward the roll center hole 120c of the electrode assembly 120, respectively. The plurality of bent uncoated regions 18a led out from the first current collector 18 are stacked on one another, and the plurality of bent uncoated regions 28a led out from the second current collector 28 are stacked on one another. The electrode assembly 120 has tabs extending from an opposite side thereof, and the first current-collecting plate 201 and the second current-collecting plate 202 (see FIG. 2B) may be disposed on the opposite side of the electrode assembly 120. The first current-collecting plate 201 may be connected to the uncoated regions 18a stacked on one another, and the second current-collecting plate 202 may be connected to the uncoated regions 28a stacked on one another. The first current-collecting plate 201 may be connected, for example by welding, to the uncoated regions 18a stacked on one another, and further electrically connected to the housing 200. The second current-collecting plate 202 may be connected, for example by welding, to the uncoated regions 28a stacked on one another, and further electrically connected to the terminal post 80.

In the following, the first electrode sheet 10 is described as a negative electrode sheet and the second electrode sheet 20 is described as a positive electrode sheet. However, it should be understood that in other embodiments, the first electrode sheet 10 may be a positive electrode sheet, and the first tab of the first electrode sheet 10 may be electrically connected to the terminal post 80.

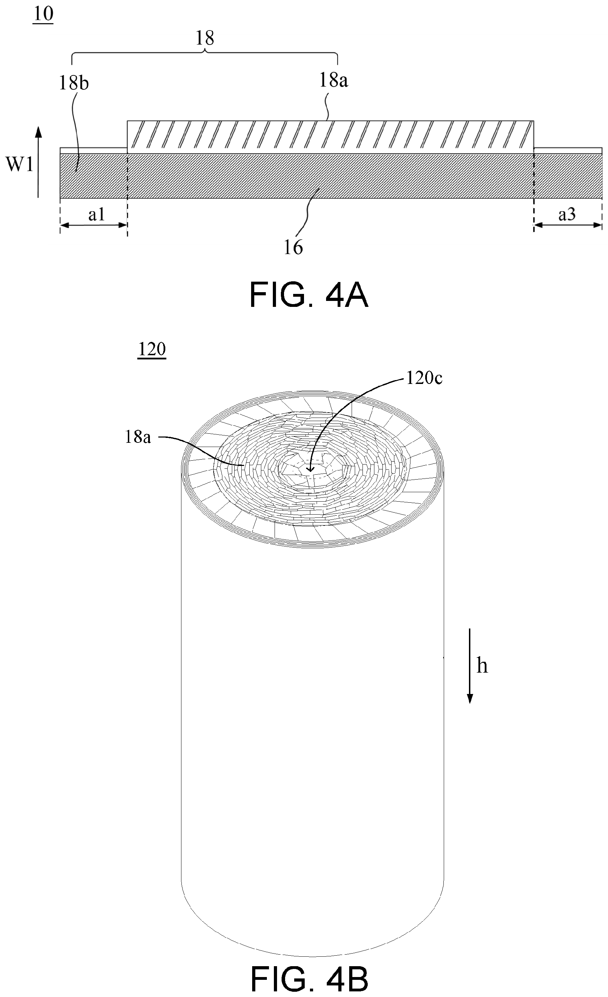

In some embodiments, the first tabs (uncoated regions 18a) adopt a cut-and-stack design. Specifically, the first active material layer 16 is coated on opposite surfaces on both sides of the first current collector 18 along the thickness direction thereof. The first active material layer 16 may be coated on the first current collector 18 by a coating device. An edge portion of the first current collector 18 in a width direction W1 (corresponding to the direction opposite to the height direction h) is a blank region where the first active material layer 16 is not coated. Referring to FIG. 4A, the blank region is cut to form a plurality of the first tabs (uncoated regions 18a).

After the first electrode sheet 10 and the second electrode sheet 20 are formed, the first electrode sheet 10, the separator, and the second electrode sheet 20 may be stacked and wound to form an electrode assembly having a wound structure. After winding, referring to FIG. 4B, the uncoated region 18a of the first electrode sheet 10 may be bent to form a first bending region 51 and a second bending region 52, and bent toward the roll center hole 120c and stacked on one another. The uncoated region 28a of the second electrode sheet 20 may be formed with reference to the arrangement of the uncoated region 18a, and then bent toward the roll center hole and stacked on one another. The uncoated region 18a and the uncoated region 28a having such a structure may be referred to as being of a cut-and-stack design.

Furthermore, the uncoated region 18a is not provided at a head a1 (see FIG. 4A) of the first current collector 18, so as to avoid the roll center hole 120c of the electrode assembly 120 formed by winding being blocked thereby; and/or, the uncoated region 18a is likewise not provided at a tail a3 (see FIG. 4A) of the first current collector 18, so as to prevent a projection of the second bending region 52 of the uncoated region 18a in the height direction h from extending beyond the electrode assembly 120, therefore it is possible to avoid any impact on the diameter of the electrode assembly 120 and facilitating the insertion of the electrode assembly 120 into the housing.

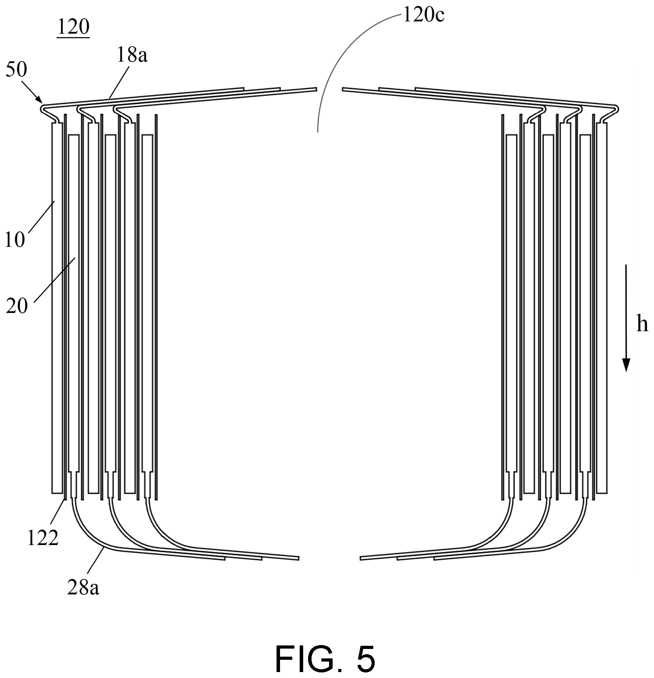

FIG. 5 is a cross-sectional view of another conventional electrode assembly 120. Multiple aspects of the electrode assembly shown in FIG. 5 may be the same as those described above with reference to FIG. 3A and FIG. 3B. The difference of the electrode assembly shown in FIG. 5 is that the uncoated region 18a of the first current collector 18 is provided with a bending region 50 that is bent away from the roll center hole 120c.

In the electrode assembly 120 shown in FIG. 3A and FIG. 5, there is a problem that the separator is susceptible to damage. For example, in the tab design of a large columnar battery cell, the first tabs (uncoated regions 18a) typically adopt the above-mentioned cut-and-stack design, so as to facilitate the welding of the tabs after bending with the current-collecting plate or the lid assembly. However, during the welding process, the separator is prone to being scorched, causing thermal shrinkage of the separator and resulting in an internal short circuit between the positive and negative electrodes of the battery.

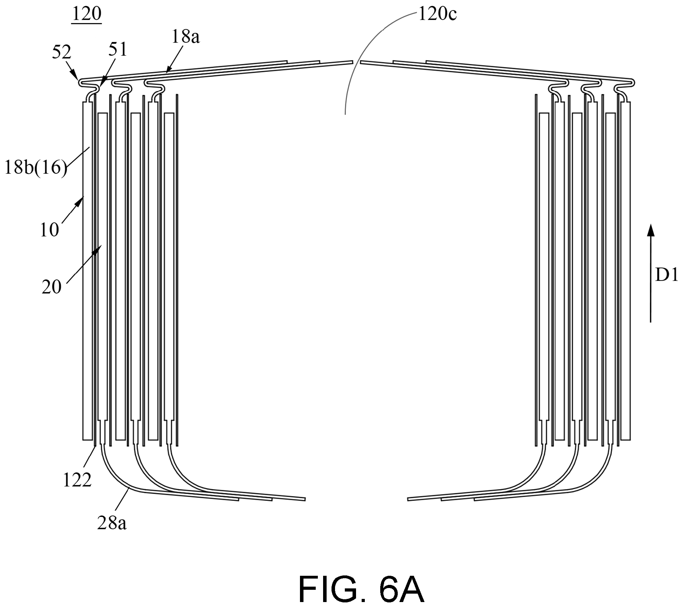

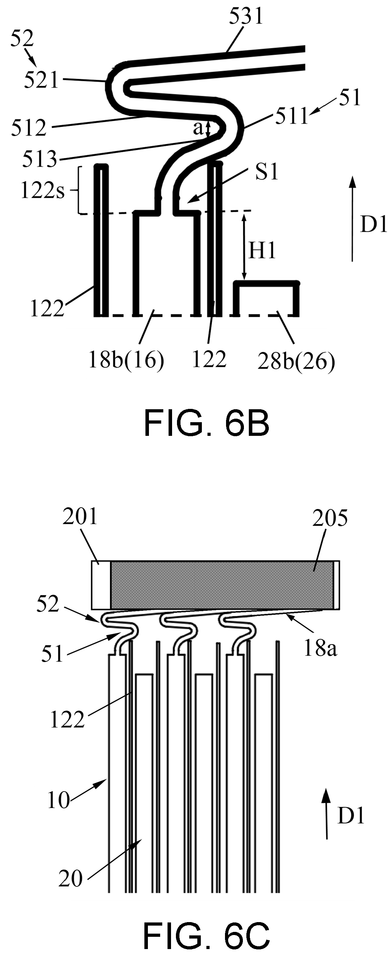

FIG. 6A is a schematic cross-sectional view of an electrode assembly according to some embodiments. FIG. 6B is a partial enlarged view of the electrode assembly shown in FIG. 6A. Referring to FIG. 6A and FIG. 6B, a direction from the coated region 18b toward the uncoated region 18a is a direction D1 (also referred to as the first direction). The direction D1 may correspond to the direction opposite to the height direction h. The uncoated region 18a of the first current collector 18 has the first bending region 51 and the second bending region 52 disposed in sequence in the direction D1. The first bending region 51 and the second bending region 52 are bent in opposite directions in a radial direction of the electrode assembly 120. In the present embodiment, the first bending region 51 is bent toward the roll center hole 120c, and the second bending region 52 is bent away from the roll center hole 120c.

A projection of the first bending region 51 in the direction D1 may cover the separator 122 on a first side S1 of the first current collector 18, where the first side S1 is a side toward which the first bending region 51 is bent. In the present embodiment, the first side S1 is a side of the first current collector 18 facing the roll center hole 120c. The projection of the first bending region 51 covers the separator 122 on a side of the first current collector 18 facing the roll center hole 120c.

FIG. 6C is a partial enlarged view of the electrode assembly shown in FIG. 6A welded with the first current-collecting plate 201. Referring to FIG. 6C, the first current-collecting plate 201 is welded with the uncoated region 18a of the first current collector 18 to form a weld mark 205. A projection of the weld mark 205 in the direction D1 covers the separator 122 covered by the first bending region 51. In this way, the first bending region 51 is disposed between the weld mark 205 and the separator 122 in the direction D1. A welding direction between the first current-collecting plate 201 and the uncoated region 18a is opposite to the direction D1, that is, from the first current-collecting plate 201 toward the electrode assembly 120. Since a thickness of the adapter member (current-collecting plate or lid assembly) is typically much greater than a thickness of a single-layer uncoated region, even if the tabs adopt a cut-and-stack design, the number of stacked layers of the uncoated region is generally limited and the stacked thickness is still less than that of the adapter member. Because formation of the weld mark requires melting both the adapter member and the uncoated region, the welding operation needs to supply relatively high welding heat, and the heat generated during welding will be conducted to the separator 122 disposed beneath the weld mark 205.

In the embodiments shown in FIG. 6A to FIG. 6C, by disposing the first bending region 51 and the second bending region 52 on the uncoated region 18a of the first current collector 18 serving as the first tab, the number of layers of the uncoated region 18a above the separator 122 is increased. The increased number of layers of the uncoated region 18a may be provided to block the welding heat from being conducted toward the separator 122 below the weld mark 205, reduce the heat reaching the separator 122, reduce the temperature at the separator 122 during the welding process, and may serve to more effectively protect the separator, avoiding the separator 122 from being scorched due to welding heat. On the other hand, by increasing the number of layers of the uncoated region 18a above the separator 122, the number of weldable layers of the uncoated region 18a with the first current-collecting plate 201 may be increased, the welding process window is increased, and the separator 122 may also be prevented from being scorched due to welding heat. Furthermore, in a columnar battery with a cut-and-stack design, particularly when the number of stacked layers of a plurality of radially adjacent uncoated regions 18a in the first direction is limited, by disposing the first bending region 51 and the second bending region 52 on each uncoated region 18a below the stacking region, the number of layers of the uncoated region 18a above the separator 122 is further increased, reducing the heat reaching the separator 122.

Specifically, the first bending region 51 may include a rounded-corner portion 511, a first straight segment 512, and a second straight segment 513, where the first straight segment 512 is connected to an end of the rounded-corner portion 511 away from the coated region 18b, and the second straight segment 513 is connected to an end of the rounded-corner portion 511 adjacent to the coated region 18b. A minimum distance between the first straight segment 512 and the second straight segment 513 in the direction D1 is a, b is a thickness of the first current collector 18, satisfying a≥2b. When the minimum distance a between the first straight segment 512 and the second straight segment 513 is set to ≥2b, a spacing between the first straight segment 512 and the second straight segment 513 may be effectively utilized for thermal insulation, reducing the possibility of thermal shrinkage of the separator 122, and preventing welding heat from being directly transferred to the separator 122 and scorching the separator 122. In some embodiments, in the radial direction of the electrode assembly, the projections of adjacent first bending regions 51 in the direction D1 do not overlap each other, that is, the first bending region 51 does not insert into the adjacent first bending region 51. In other embodiments, the first bending region 51 may insert into the adjacent first bending region 51, but a gap is retained between the two to utilize the gap for thermal insulation, blocking the welding heat from being conducted toward the separator 122 below the weld mark 205, and avoiding the separator 122 from being scorched due to welding heat.

It should be noted that the term "straight" as used in the present disclosure (e.g., first straight segment) is not limited to being horizontally straight, but rather refers to a portion of the uncoated region 18a where no bending has occurred.

In some embodiments, the second bending region 52 is a rounded-corner portion 521. The uncoated region 18a may further include a straight connecting segment 531, where the straight connecting segment 531 is connected to an end of the second bending region 52 away from the coated region 18b. The straight connecting segments 531 of a plurality of uncoated regions 18a may be stacked in the direction D1. The rounded-corner portion 511 of the first bending region 51 and the second bending region 52 are connected through the first straight segment 512.

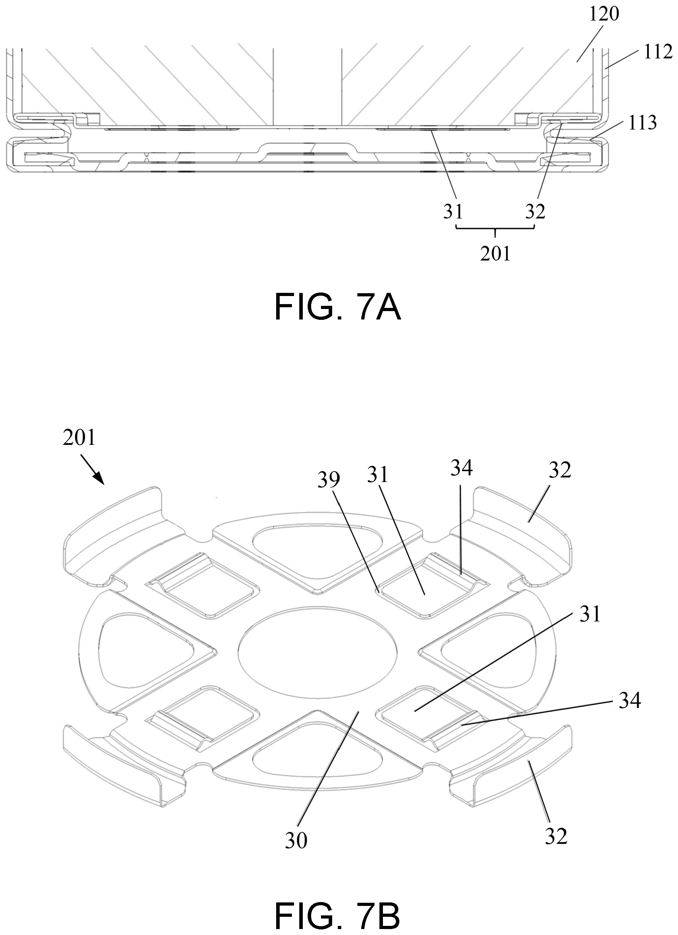

In some embodiments, the first current-collecting plate 201 is located on a side of the electrode assembly 120 along the direction D1, and the uncoated region 18a is welded to the first current-collecting plate 201. FIG. 7A shows a partial enlarged view of the electrode assembly 120 on a side of the first current-collecting plate 201 in the present embodiment. FIG. 7B shows a structural view of the first current-collecting plate 201 in the present embodiment.

As shown in FIG. 7A and FIG. 7B, the first current-collecting plate 201 may include a body portion 30 and at least one tab connecting portion 31, where the tab connecting portion 31 is disposed on the body portion 30 and is electrically connected to the body portion 30. The number and specific structural form of the tab connecting portion 31 are not limited, as long as a stable electrical connection with the first tab may be formed. In some embodiments, a hollow structure 39 may be disposed around the tab connecting portion 31, and the hollow structure 39 is provided so as to partially surround an outer periphery of the tab connecting portion 31. An end of the outer periphery of the tab connecting portion 31 where the hollow structure 39 is not disposed is electrically connected to the body portion 30, and a portion of the outer periphery of the tab connecting portion 31 where the hollow structure 39 is disposed is separated from the body portion 30 by the hollow structure 39. The specific shape of the hollow structure 39 is not limited, and may be, for example, an open circular ring structure, an open square ring structure, or the like, as long as the requirements of electrical connection of the tab connecting portion 31 may be satisfied.

In some embodiments, a bending portion 34 is disposed at a connection position between the tab connecting portion 31 and the body portion 30. One end of the bending portion 34 may be integrally formed with the tab connecting portion 31, and the other end of the bending portion 34 may be integrally formed with the body portion 30. Multiple options of the shape of the bending portion 34 may be available, as long as parallelism between a surface of the tab connecting portion 31 and a surface of the body portion 30 may be ensured. By disposing the bending portion 34 at the connection position between the body portion 30 and the tab connecting portion 31, the bending portion 34 may serve to buffer stress, and may improve the stability of the welded connection between the tab connecting portion 31 and the first tab.

The body portion 30 of the first current-collecting plate 201 may further be provided with at least one housing connecting portion 32, where the number of housing connecting portions 32 may match the number of tab connecting portions 31, and the housing connecting portions 32 are disposed on an outer circumference of the tab connecting portions 31. One end of the housing connecting portion 32 is electrically connected to the body portion 30, and the other end of the housing connecting portion 32 is fixedly and electrically connected to the sidewall 112 of the housing 200, where the fixed electrical connection includes but is not limited to a welded connection. The structural shape of the housing connecting portion 32 is not limited, as long as the connection strength and current flow requirements with the sidewall 112 may be satisfied. Specifically, the housing connecting portion 32 may be located on a side of the groove 113 facing the electrode assembly 120, and may be welded and fixed to a side of the groove 113 facing the electrode assembly 120.

In some embodiments, the groove 113 is formed by the following steps: the housing connecting portion 32 is connected to the sidewall 112 of the housing 200; a grooving process is then performed to deform the sidewall 112 to form the groove 113, such that the housing connecting portion 32 is connected to a side of the groove 113 facing the electrode assembly 120. During the deformation process of the groove 113, because a large deformation stress may be applied on the housing connecting portion 32, and such stress may be transmitted to the coated region 18b of the first current collector 18, causing the first active material layer 16 to detach, the first bending region 51 may provide buffering during the grooving process, so as to avoid the pressure during the grooving process from being transmitted to the coated region 18b of the first current collector 18 and causing detachment of the first active material layer 16.

Specifically, referring further to FIG. 6A and FIG. 6B, the straight connecting segments 531 of the plurality layers of uncoated regions 18a are stacked in the direction D1 and are welded and connected to the first current-collecting plate 201. In addition, the first straight segment 512 below the straight connecting segment 531 may also be welded and connected to the first current-collecting plate 201. That is, both the straight connecting segment 531 and the first straight segment 512 may be provided for welded connection with the first current-collecting plate 201, thereby increasing the number of weldable layers of the uncoated region 18a. In such embodiments, the uncoated region 18a may be disposed on an outer circumference of the electrode assembly. Compared with the related art, the number of layers of the stacked tabs on the outer circumference is relatively small. By increasing the number of weldable layers of the uncoated region 18a, the present disclosure may prevent the separator 122 from being burned by welding heat. Furthermore, after the first bending region 51 is added, the uncoated region 18a at the outer circumference may also be welded to the first current-collecting plate 201, which increases a welding area between the first current-collecting plate and the tabs, and reduces the internal resistance of the battery.

In other embodiments, the straight connecting segment 531 may be welded and connected to the first current-collecting plate 201, and the first straight segment 512 may not be welded and connected to the first current-collecting plate 201. In this way, the straight connecting segment 531 of the uncoated region 18a is welded and connected to the first current-collecting plate 201 to form a weld mark (such as weld mark 205 in FIG. 6C), and the weld mark of the uncoated region 18a is spaced apart from the first straight segment 512. In such embodiments, the uncoated region 18a may be disposed at an inner circumference of the electrode assembly to be welded and connected to a central area of the first current-collecting plate 201, such that the number of layers of the stacked uncoated regions 18a may be relatively large. By disposing the first straight segment 512 to be spaced apart from the weld mark of the uncoated region 18a welded to the first current-collecting plate 201, heat blocking may be achieved to block the welding heat from being conducted toward the separator 122, thereby reducing the risk of the separator 122 being burned or undergoing thermal shrinkage.

In other embodiments, the uncoated region 18a may be directly welded and connected to the lid assembly 220, i.e., the first current-collecting plate 201 may not be disposed. Specifically, the straight connecting segment 531 is stacked in the direction D1 and is directly welded and connected to the lid assembly 220. In some embodiments, the first straight segment 512 may also be welded and connected to the lid assembly 220. In other embodiments, the straight connecting segment 531 is welded and connected to the lid assembly 220, and the first straight segment 512 may not be welded and connected to the lid assembly 220, wherein the weld mark of the connection between the lid assembly 220 and the straight connecting segment 531 is spaced apart from the first straight segment 512.

The separator 122 has a segment 122s that extends beyond the first active material layer 16 in the direction D1, and an extension distance by which the segment 122s extends beyond the first active material layer 16 is 0.5 mm to 3 mm. That is, before the separator between the positive electrode sheet and the negative electrode sheet are sequentially stacked and wound, the segment 122s extends in the direction D1, and the extension distance of the segment 122s is a height of the segment 122s in the direction D1. If the extension distance of the segment 122s is greater than 3 mm, the separator 122 may be excessively long, which may cause waste, and may also cause the separator 122 pressed and bent by the first bending region 51 to extend beyond the first bending region 51, making thermal shrinkage more likely to occur. If the extension distance of the segment 122s is less than 0.5 mm, assembly errors may easily cause the separator 122 to fail to provide effective insulation, resulting in a short circuit.

In some embodiments, in the direction D1, the height by which the first active material layer 16 extends beyond the second current collector 28 is H1, and H1 is greater than 1 mm. Since the first active material layer 16 may be provided to provide support for the uncoated region 18a, H1 being greater than 1 mm may ensure that a height of the second current collector 28 does not exceed that of the first active material layer 16, thereby ensuring that a spacing exists between the first bending region 51 and the second current collector 28, and that a spacing exists between the first bending region 51 and both the second current collector 28 and the second active material layer 26, thus avoiding an internal short circuit caused by overlap.

In the direction D1, the spacing between the first bending region 51 and the first active material layer 16 is d, and 0.5 mm≤d≤2.5 mm. In embodiments where two first bending regions 51 are disposed, d is a spacing between the first bending region 51 closest to the first active material layer 16 and the first active material layer 16. If d is too small, the first active material layer 16 may be subjected to stress due to being too close to the first bending region 51 and may detach. If d is too large, the height space of the battery may be wasted.

The secondary battery may further be provided with a tail insulating tape for fixing a tail end of the separator 122 on an outer periphery of the electrode assembly. A main body of the electrode assembly 120 may include a coated region of the first active material layer and the first current collector 18, and any of the second bending region 52 (i.e., including the second bending region 52 at the outermost circumference) is located within a projection range of the main body of the electrode assembly 120 and the tail insulating tape in the direction D1. That is, the outermost edge of the outwardly bent second bending region 52 does not extend beyond the outermost edge of the electrode assembly (including the tail insulating tape), so that the diameter of the electrode assembly may not be affected, facilitating the insertion of the electrode assembly into the housing.

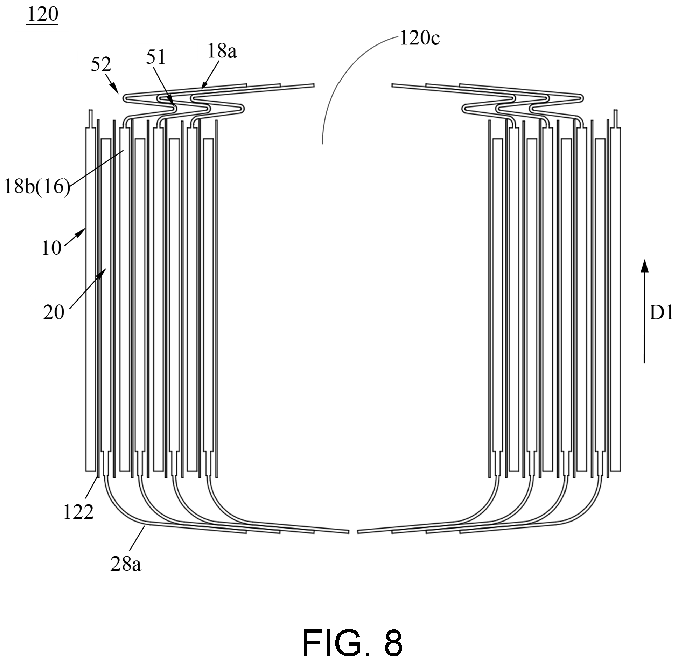

FIG. 8 is a schematic cross-sectional view of an electrode assembly according to another embodiment. Multiple aspects of the embodiment shown in FIG. 8 may be similar to those described above with reference to FIG. 2A to FIG. 7B, and the following mainly describes the differences of the embodiment shown in FIG. 8. Referring to FIG. 8, in the present embodiment, an end portion of the first bending region 51 in a bending direction thereof is inserted into the adjacent first bending region 51 in the radial direction, and a gap may be retained between the end portions of the two first bending regions 51 in their bending direction, so as to utilize the gap for thermal insulation. By arranging adjacent first bending regions 51 to be interleaved with one another, the number of layers of uncoated regions 18a disposed above the same separator 122 may be increased; moreover, because the first bending region 51 is continuous in the radial direction without gaps, the risk of light leakage is reduced, thereby further mitigating the risk of thermal damage to the separator 122.

In the present embodiment, an end portion of the second bending region 52 in a bending direction thereof is also inserted into the adjacent second bending region 52 in the radial direction. By arranging adjacent second bending regions 52 to be interleaved with one another, the number of layers of uncoated regions 18a disposed above the same separator 122 may be increased; moreover, because the second bending region 52 is continuous in the radial direction without gaps, the risk of light leakage is reduced, thereby further mitigating the risk of thermal damage to the separator 122. In some embodiments, the first straight segments 512 of the adjacent first bending regions 51 may be welded to the first current-collecting plate 201, increasing the number of layers of the uncoated region 18a above the separator 122 that may be welded to the first current-collecting plate 201.

In the present embodiment, at least the outermost circumference of the electrode assembly 120 may not be provided with a tab having the first bending region 51 and the second bending region 52, so as to avoid the first bending region 51 and the second bending region 52 from extending beyond an outer diameter of the main body of the electrode assembly 120.

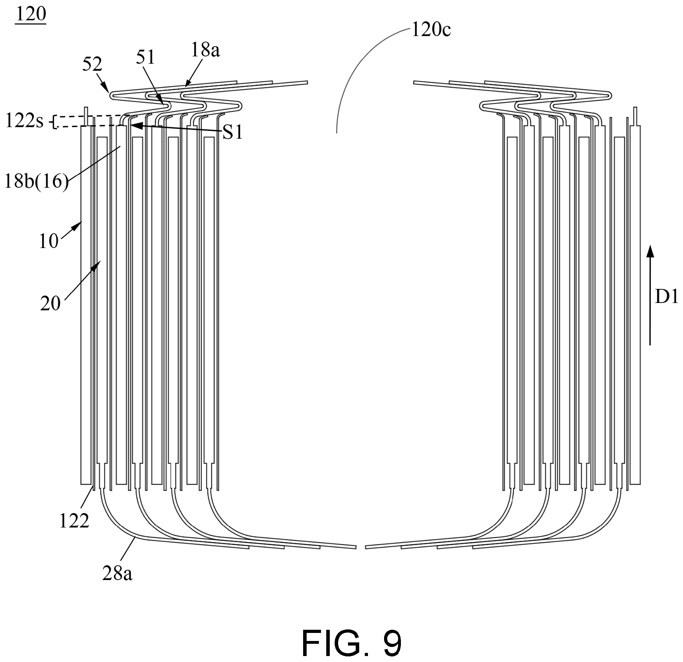

FIG. 9 is a cross-sectional view of an electrode assembly according to still another embodiment. Multiple aspects of the embodiment shown in FIG. 9 may be similar to those described above with reference to FIG. 8, and the following mainly describes the differences of the embodiment shown in FIG. 9. Referring to FIG. 9, the first bending region 51 is bent toward the first side S1, i.e., bent toward the roll center hole 120c. The first bending region 51 contacts the separator 122 located on the first side S1 of the first current collector 18, and presses down the separator 122 such that the separator 122 is bent. When a bending point of the first bending region 51 is lower than an end portion of the separator 122 away from the first active material layer 16, the separator 122 is pressed such that the separator 122 is bent to below the first bending region 51, which may increase a spacing between a welding area of the first current-collecting plate 201 and the separator 122, reduce the possibility of the separator 122 being scorched, and thus may avoid the heat generated during welding of the second bending region 52 from affecting the separator 122 and causing the separator 122 to be scorched.

In some embodiments, the projection of the first bending region 51 in the direction D1 may completely cover the separator 122 in contact with the first bending region 51. That is, the bent separator 122 does not extend beyond the first bending region 51. Thus, thermal shrinkage of the protruding portion of the separator 122 due to welding heat may be avoided, which would otherwise cause an internal short circuit.

More specifically, the separator 122 has the segment 122s that extends beyond the first active material layer 16 in the direction D1. The extension distance of the segment 122s beyond the first active material layer 16 is 0.5 mm to 3 mm. In the present embodiment, the segment 122s contacts the first bending region 51 and is bent. The extension distance of the segment 122s refers to a length of the segment 122s itself in a straight state. If the extension distance of the segment 122s is greater than 3 mm, the separator 122 is excessively long, which would cause waste, and would be very likely to cause the separator 122 to extend beyond the first bending region 51, making thermal shrinkage prone to occur. If the extension distance of the segment 122s is less than 0.5 mm, assembly errors may easily cause the separator 122 to fail to provide effective insulation, resulting in a short circuit.

Additionally, it should be understood that although only one first bending region 51 is shown in the embodiments illustrated above, in other embodiments, along the direction D1, another first bending region 51 may also be disposed on a side of the second bending region 52 away from the first active material layer 16 in the uncoated region 18a. Therefore, in the direction D1, the uncoated region 18a may be provided with two first bending regions 51, with the second bending region 52 located between the two first bending regions 51. The two first bending regions 51 are bent in the same direction (e.g., both bent toward the roll center hole 120c) in the radial direction, and the two first bending regions 51 and the second bending region 52 are bent in opposite directions in the radial direction. In such an embodiment, the first bending region 51 disposed at an upper end (farther from the first active material layer 16) may be provided for welding with the first current-collecting plate 201 or the lid assembly 220, and the first bending region 51 disposed at a lower end (closer to the first active material layer 16) may serve as an obstacle to a laser path or form a heat-insulating space. Such design may improve the laser welding process window, improve welding quality, and avoid scorching the separator 122. In addition, disposing two first bending regions 51 may avoid space waste caused by an excessive number of first bending regions 51.

An embodiment of the present disclosure further provides a battery pack 1002 (see FIG. 1), including any one of the secondary batteries 100 described above, and the battery pack 1002 may have the advantageous effects described above with respect to the secondary battery 100.

An embodiment of the present disclosure further provides an electronic device 1000 (see FIG. 1), including the battery pack 1002 described above, and the electronic device 1000 may have the advantageous effects described above with respect to the secondary battery 100 and/or the battery pack 1002.

## Claims

1. A battery cell, **characterized in that**, comprising:
a housing (200), provided with an electrode terminal;
an electrode assembly (120), accommodated in the housing (200), comprising a first electrode sheet (10), a second electrode sheet (20), and a separator (122) disposed between the first electrode sheet (10) and the second electrode sheet (20), wherein the first electrode sheet (10) comprises a first current collector (18) and a first active material layer (16), the first current collector (18) comprises a coated region (18b) coated with the first active material layer (16) and an uncoated region (18a) not coated with the first active material layer (16), the uncoated region (18a) is electrically connected to the electrode terminal, and a direction from the coated region (18b) toward the uncoated region (18a) is a first direction;
an adapter member, located on a side of the electrode assembly (120) adjacent to the uncoated region (18a) along the first direction, wherein the adapter member is welded to the uncoated region (18a) to form a weld mark (205), and a welding direction between the adapter member and the uncoated region (18a) is opposite to the first direction,
wherein the uncoated region (18a) of the first current collector (18) has a first bending region (51) and a second bending region (52) disposed in sequence along the first direction, the first bending region (51) and the second bending region (52) are bent in opposite directions in a radial direction of the electrode assembly (120), and a projection of the first bending region (51) in the first direction covers the separator (122) on a first side of the first current collector (18), the first side is a side toward which the first bending region (51) is bent, and a projection of the weld mark (205) in the first direction covers the separator (122) covered by the first bending region (51).

2. The battery cell according to claim 1, wherein the adapter member is a current-collecting plate, wherein the first bending region (51) and the second bending region (52) are connected through a first straight segment (512), and the first straight segment (512) is welded to the current-collecting plate or the weld mark (205) between the current-collecting plate and the uncoated region (18a) is spaced apart from the first straight segment (512).

3. The battery cell according to claim 2, wherein the uncoated region (18a) further comprises a straight connecting segment (531), the straight connecting segment (531) is connected to an end of the second bending region (52) away from the coated region (18b), and the straight connecting segments (531) of a plurality of the uncoated regions (18a) are stacked in the first direction and welded to the current-collecting plate.

4. The battery cell according to claim 1 or 2, wherein the first bending region (51) comprises a rounded-corner portion (511), a first straight segment (512) and a second straight segment, the first straight segment (512) is connected to an end of the rounded-corner portion (511) away from the coated region (18b), the second straight segment is connected to an end of the rounded-corner portion (511) adjacent to the coated region (18b), and a minimum distance between the first straight segment (512) and the second straight segment in the first direction is a, wherein: a≥2b, and b is a thickness of the first current collector (18).

5. The battery cell according to claim 1, wherein the first bending region (51) is in contact with the separator (122) on the first side of the first current collector (18), and presses down the separator (122) to cause the separator (122) to bend.

6. The battery cell according to claim 5, wherein the projection of the first bending region (51) completely covers the separator (122) in contact with the first bending region (51).

7. The battery cell according to claim 6, wherein the separator (122) has a segment (122s) that extends beyond the first active material layer (16) in the first direction, and an extension distance by which the segment (122s) extends beyond the first active material layer (16) is 0.5 mm to 3 mm.

8. The battery cell according to claim 1, wherein the second electrode sheet (20) comprises a second current collector (28) and a second active material layer (26) covering a partial surface of the second current collector (28),
in the first direction, a height by which the first active material layer (16) extends beyond the second current collector (28) is greater than 1 mm.

9. The battery cell according to claim 8, wherein the second current collector (28) comprises a coated region (18b) coated with the second active material layer (26) and an uncoated region (18a) not coated with the second active material layer (26), the coated region (18b) of the second current collector (28) and the uncoated region (18a) of the second current collector (28) are disposed adjacent to each other along a direction opposite to the first direction,
wherein the housing (200) further comprises another electrode terminal, and the uncoated region (18a) of the second current collector (28) is electrically connected to the another electrode terminal.

10. The battery cell according to claim 1 or 2, wherein an end portion of the first bending region (51), in a bending direction thereof, is inserted into a first bending region (51) adjacent thereto in the radial direction.

11. The battery cell according to claim 1, further comprising:
a tail insulating tape, configured to fix a tail end of the separator (122);
wherein the electrode assembly (120) comprises a main body, the main body comprises the first active material layer (16) and the coated region (18b) of the first current collector (18), the uncoated region (18a) are plural in number and any one of the second bending regions (52) is located within a projection range of the main body and the tail insulating tape in the first direction.

12. The battery cell according to claim 1, wherein along the first direction, the uncoated region (18a) is further provided with another first bending region (51) disposed on a side of the second bending region (52) away from the first active material layer (16).

13. The battery cell according to claim 1, wherein the housing (200) comprises an end wall (111) and a sidewall (112) connected to an edge of the end wall (111), one end of the sidewall (112) along the first direction has an opening, the sidewall (112) adjacent to the opening is provided with a groove (113) protruding inward in a radial direction of the opening, the electrode assembly (120) is located between the end wall (111) and the groove (113);
the adapter member is a current-collecting plate, and the current-collecting plate is connected to a side of the groove (113) facing the electrode assembly (120).

14. The battery cell according to claim 1, wherein one end of a sidewall (112) of the housing (200) along the first direction has an opening, the housing (200) further comprises a lid assembly (220) covering the opening, the adapter member is the lid assembly (220),
the uncoated region (18a) is welded to the lid assembly (220), and the lid assembly (220) is electrically connected to the electrode terminal;
wherein the first bending region (51) and the second bending region (52) are connected through a first straight segment (512), the first straight segment (512) is welded to the lid assembly (220), or the weld mark (205) between the lid assembly (220) and the uncoated region (18a) is spaced apart from the first straight segment (512),
wherein the electrode terminal is the housing (200), or the electrode terminal is a terminal post (80), and the terminal post (80) is connected to the housing (200).

15. The battery cell according to any one of claims 1 to 2, 5 to 9 and 11 to 14, wherein in the first direction, a spacing between the first bending region (51) and the first active material layer (16) is d, where 0.5 mm≤d≤2.5 mm.
